# EUROPEAN PATENT APPLICATION

(11) **EP 4 738 942 A1**
(43) Date of publication of application: **06.05.2026**
(21) Application number: 25211648.8
(22) Date of filing: 28.10.2025
(51) Int. Cl.: H04W 52/02, H04W 76/15, H04W 84/12, H04W 88/06

(54) **SYSTEMS AND METHODS FOR RETAINING LOW POWER CONNECTIONS IN MULTILINK NETWORKS**

(30) Priority: 30.10.2024 US 202418931315
(71) Applicant: Avago Technologies International Sales Pte. Limited, Singapore 768923 (SG)
(72) Inventor: Buhari, Nizamudeen, Irvine, 92618 (US); DUTTA H K, Mahesh, Irvine, 92618 (US); Sahoo, Jimut, Irvine, 92618 (US); Daddimane, Renuka, Irvine, 92618 (US)
(74) Representative: Dilg, Haeusler, Schindelmann Patentanwaltsgesellschaft mbH

(57) **Abstract**

The disclosure describes systems and methods for retaining low-power connections in multilink networks. An access point can include a plurality of radios, each operating on a different frequency band. The access point can establish connections with clients. The access point can receive a frame indicating the connected clients are entering sleep mode. In response, the access point can cause a radio, operating on a longer range and lower power band, to go into sleep mode, while maintaining a lower power connection with the clients. The access point can switch off the other radios operating on higher frequency bands. During a wakeup period, the access point can transmit a beacon via the lower power radio, indicating to the clients that the access point has broadcast and multicast (BCMC) data. The access point can transmit the BCMC data via the low-power radio to the clients.

## Description

### FIELD OF THE DISCLOSURE

This disclosure generally relates to systems and methods for wireless communication between access points and wireless communication devices, including, without limitation, retaining low-power connections in multilink networks.

### BACKGROUND

The market for wireless communication devices has been growing due to increased use of portable devices, increased connectivity, and data transfer between all manners of devices. Digital switching techniques have facilitated the large-scale deployment of affordable, easy-to-use wireless communication networks. Wireless communication can operate in accordance with various standards, such as the IEEE 802.11x (e.g., Wi-Fi technology), Bluetooth, global system for mobile communications (GSM), and code division multiple access (CDMA). Using such technologies, wireless communication devices can connect to local area networks and the internet without physical cables, communicating over radio frequencies and across various spaces and ranges.

### SUMMARY

The technical solutions of the present disclosure are directed to retaining low-power connections in multilink network operations (MLO) by managing the use of multiple radios operating across different frequency bands. In MLO-supported systems, an access point and/or a client device can be configured to support multiple simultaneous links using radios operating on various bands, such as 2G, 5G, or 6G. While MLO provides flexibility and performance benefits by allowing devices to use multiple radios on different bands, the configuration can also present challenges in managing power consumption, particularly during idle states where a device is not actively transmitting or receiving data. Devices often prioritize throughput and performance, which can result in the continued use of high-power or high-capacity bands, even when the network is idle. For example, a device may maintain a connection on a high-capacity 5G band, even when there is no active data traffic, consuming unnecessary power. Furthermore, when a device enters an idle state, either all the active links or the operating/primary link is used to maintain the connection. However, the link selected for its data efficiency is often unsuitable for idle or standby states, where power consumption takes precedence. As a result, maintaining connections on high-capacity links, such as 5G or 6G, even when no active data is being transmitted leads to inefficient power usage.

The technical solutions disclosed herein can overcome the challenges of managing power consumption in MLO by dynamically switching between high-capacity bands and low-power bands. During active data transmission, the high-capacity 6G/5G bands can be used to manage heavy traffic, and the low-capacity 2G band may not participate in data traffic. As data traffic slows and the Wi-Fi connection approaches an idle state, the 2G band can transition from hibernate to sleep mode, while the 6G/5G band can move from active to hibernate after communicating the power management (PM) state to the access point. As the 2G band is already in PM state for the access point, the client device may not need to transmit a NULL frame for power management purposes but can listen to the delivery traffic indication message (DTIM) to receive beacon and broadcast and multicast (BCMC) packet transmissions from the access point. The 2G band can manage the keep-alive operation to avoid prematurely switching the low-power band to the high-capacity bands, as the keep-alive exchanges are bare minimum traffic to maintain the client device's connection with the access point.

Once the access point informs the client device of buffered data, the client device can switch from the 2G band to the 6G/5G band. The client device can decide whether to switch bands immediately or wait until data traffic exceeds a certain threshold or is for a low-latency application. By using the 2G band for beacon reception, the MLO client device can avoid missing unicast data traffic and experience no delay in retrieving buffered data. During the client device's sleep state, the access point may not deliver data via any band until the client device wakes up one or more bands, allowing the high-power radios to remain in hibernate. Once the client detects bufferable data via 2G beacon reception, the client device can activate one or more radios for data reception. For BCMC data, the access point buffers packets and delivers them after the DTIM-0 beacon delivery. For example, the DTIM-0 beacon signals that the access point will transmit any buffered multicast or broadcast data after this beacon. In some cases, when legacy or single-link clients are connected to the access point, the access point can deliver BCMC packets across all bands to facilitate proper reception. The lower rate BCMC packets can also be received by the 2G band.

The technical solutions disclosed herein can result in reduced sleep current consumption for MLO client devices, comparable to legacy 2G clients. Additionally, the robust, long-range 2G band can minimize connection loss and premature roaming. Both the access point and the client device can conserve power by shutting down radios operating on high-power bands when not in use, freeing up the 6G/5G slices for roaming when desired. Unlike multi-link simultaneous transmission reception (ML STR), data traffic is not mixed across links unless they have similar capabilities. As a result, the peak 6G throughput can be achieved by the client device without interference or performance degradation from other links.

At least one aspect of the technical solutions is directed to a system of retaining low-power connections in multilink networks. The system can include an access point configured with a plurality of radios each operating on a different band of a plurality of bands. A first radio of the plurality of radios can operate on a first band having a longer range and lower power than bands of remaining radios of the plurality of radios. The access point can be configured to establish, using one or more of the plurality of radios, one or more connections with the one or more clients. The access point can be configured to receive a frame from the one or more clients connected to the access point. The frame can indicate the one or more clients going into sleep mode. Responsive to the frame, the access point can be configured to cause the first radio to go into sleep mode, while maintaining a lower power connection on the first band to the one or more clients and switch off the remaining radios of the plurality of radios. The access point can be configured to transmit by the first radio via the lower power connection on the first band, during a wakeup period, a beacon to the one or more clients. The beacon can indicate the access point has broadcast and multicast (BCMC) data to transmit the one or more clients for the plurality of bands. The access point can be configured to transmit, using only the first radio operating on the first band via the lower power connection, the BCMC data to the one or more clients.

In some embodiments, the access point can be further configured to use the first radio for transmitting data with the one or more clients until an amount of data to be transmitted exceeds a threshold. In some embodiments, the access point can be further configured to activate at least one or more of the remaining radios of the plurality of radios and switch to the at least one or more of the remaining radios to transmit data to the one or more clients. In some embodiments, the access point can be further configured to determine that data to be transmitted to the one or more clients is for a low latency application and responsive to the determination, activate at least one or more of the remaining radios of the plurality of radios to transmit the data. In some embodiments, the access point can be further configured to advertise support for multi-link lower power connection retention (ML-LPCR) capability to the one or more clients. In some embodiments, the access point can be further configured to advertise support for the ML-LPCR capability in one of the following: one or more beacons, probe responses, and association response frames.

In some embodiments, the access point can be further configured to generate and transmit to the one or more clients a multi-link (ML) power save notification frame. The multi-link (ML) power save notification frame can identify one of a power save state or a radio-on state of each of the plurality of different radios. In some embodiments, one or more clients can include a plurality of radios operating on different bands, and responsive to going into sleep mode, maintain the connection to the access point using a radio of the plurality of radios on the first band while deactivating any remaining radios of the plurality of radios. In some embodiments, the first band of the first radio can be 2G while remaining bands of the plurality of bands can include one or more of 5G or 6G.

Another aspect of the technical solutions is directed to a system of retaining low-power connections in multilink networks. The system can include a Wi-Fi device configured with a plurality of radios, each operating on a different band of a plurality of bands. A first radio of the plurality of radios can operate on a first band having a longer range and lower power than bands of remaining radios of the plurality of radios. The Wi-Fi device can be configured to establish, using the plurality of radios, connections with an access point. Responsive to determining to go into sleep mode, the Wi-Fi device can be configured to cause the first radio to go into sleep mode, while maintaining a lower power connection on the first band to the access point and switch off the remaining radios of the plurality of radios. The Wi-Fi device can be configured to transmit a frame to the access point, the frame indicating to the access point that the Wi-Fi device is going into sleep mode. The Wi-Fi device can be configured to receive, by the first radio via the lower power connection on the first band, during a wakeup period, a beacon from the access point, the beacon indicating the access point has broadcast and multicast (BCMC) data to transmit to the Wi-Fi device for the plurality of bands. The Wi-Fi device can be configured to receive, using only the first radio on the first band via the lower power connection, the BCMC data from the access point.

In some embodiments, the Wi-Fi device can be configured, responsive to the beacon, to activate at least one or more of the remaining radios of the plurality of radios. In some embodiments, the Wi-Fi device can be further configured to communicate, via one or more frames or beacons, an active state of at least one or more of the remaining radios of the plurality of radios. In some embodiments, the Wi-Fi device can be further configured to use the first radio for communicating data with the access point until an amount of data to be communicated exceeds a threshold. In some embodiments, the Wi-Fi device can be further configured, responsive to the amount of data to be communicated exceeding the threshold, to activate at least one or more of the remaining radios of the plurality of radios to communicate the data. In some embodiments, the Wi-Fi device can be further configured to determine that data to be communicated with the Wi-Fi device is for a low latency application and, responsive to the determination, activate at least one or more of the remaining radios of the plurality of radios to transmit the data. In some embodiments, the first band of the first radio can be 2G while remaining bands of the plurality of bands can include one or more of 5G or 6G.

Yet another aspect of the technical solutions is directed to a device of retaining low-power connections in multilink networks. The device can include a plurality of radios, each operating on a different band of a plurality of bands. A first radio of the plurality of radios can operate on a first band having a longer range and lower power than bands of remaining radios of the plurality of radios. The device can include one or more processors. The one or more processors can be configured to generate a multi-link (ML) power save notification frame. The multi-link (ML) power save notification frame can identify the power save state and the radio-on state of each of the plurality of different radios. The one or more processors can be configured to transmit the multi-link (ML) power save notification frame to one or more clients connected to the access point.

In some embodiments, the one or more processors can be further configured to set a power management bit in a field of the multi-link (ML) power save notification frame to a value to indicate the device is entering a power-saving (PS) mode. In some embodiments, the one or more processors can be further configured to set a power management bit in a field of the multi-link (ML) power save notification frame to a value to indicate the device is exiting a power-saving (PS) mode. In some embodiments, the one or more processors can be further configured to generate the multi-link (ML) power save notification frame to have a power-saving link bitmap to identify whether a radio operating on a band is in power management mode or is active.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A illustrates a block diagram depicting a network environment including one or more access points in communication with one or more devices or stations, in accordance with one or more embodiments.
FIGS. 1B and 1C illustrate block diagrams depicting computing devices useful in connection with the methods and systems described herein, in accordance with one or more embodiments.
FIG. 2 illustrates a block diagram of an example system for retaining low-power connections in multilink networks, in accordance with one or more embodiments.
FIGS. 3-5 illustrate an example flow diagram of a method for retaining low-power connections in multilink networks, in accordance with one or more embodiments.
FIG. 6 illustrates an example implementation of multi-band communication between a station and an access point, in accordance with one or more embodiments.

### DETAILED DESCRIPTION

The following IEEE standard(s), including any draft versions of such standard(s), are hereby incorporated herein by reference in their entirety and are made part of the present disclosure for all purposes: WiFi Alliance standards and IEEE 802.11 standards, including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment that can be useful for practicing embodiments described herein; and
- Section B describes systems and methods for retaining low-power connections in multilink networks.

### A. Computing and Network Environment

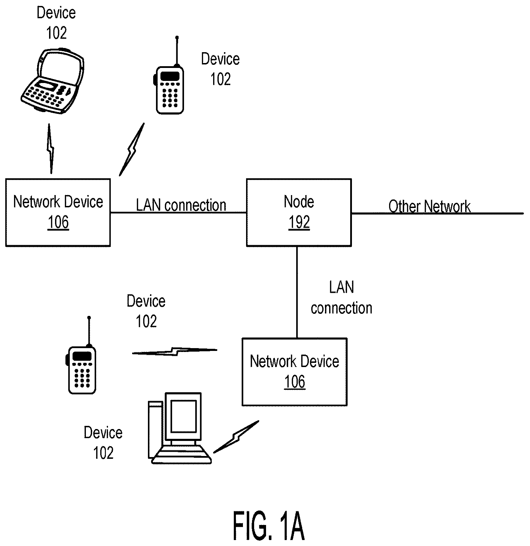

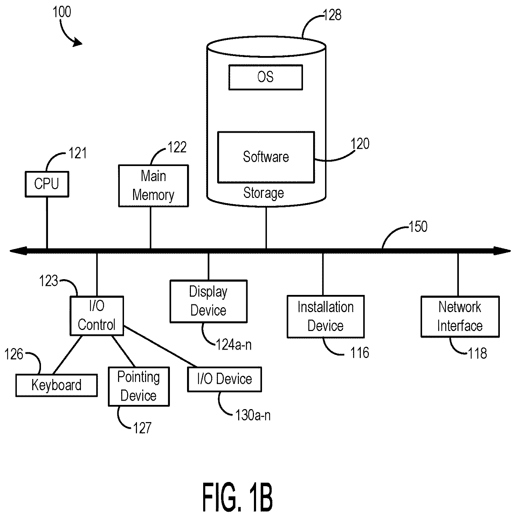

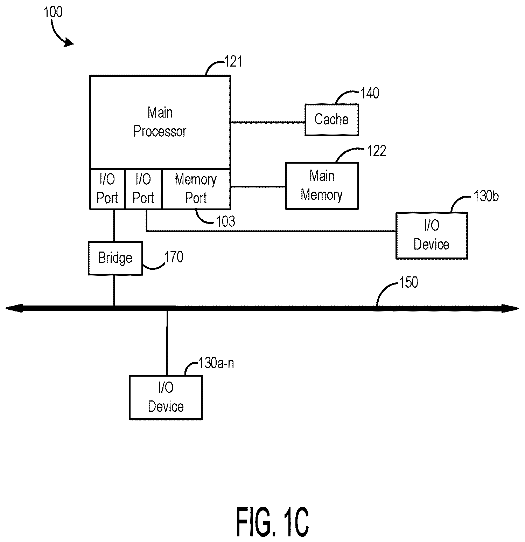

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using Wi-Fi or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other communication devices 102 to utilize that wired connection. A network device 106 or AP can be implemented to support a standard for sending and receiving data using one or more radio frequencies. Those standards and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency-based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an input/output (I/O) controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more I/O devices 130a-130n, and a cache memory 140 in communication with the central processing unit or processor 121.

The central processing unit or processor 121 is any logic circuitry that responds to, and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with the main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screens, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, a USB device, a hard drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.1 lad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect, or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smartphone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Systems and Methods for Retaining Low-Power Connections in Multilink Networks

Below are detailed descriptions of various concepts related to, and embodiments of, techniques, approaches, methods, apparatuses, and systems for retaining low-power connections in multilink networks. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions disclosed herein can manage power consumption in MLO networks by dynamically switching between high-capacity and low-power bands. During active data transmission, 6G/5G bands can manage heavy traffic. As traffic decreases, 2G can manage keep-alive operations, and 6G/5G bands can enter hibernation (e.g., going into a low-power state to conserve energy). The client device or the access point can switch back to 6G/5G when data thresholds are exceeded, or low latency is desired. By using 2G for beacon reception, the client device can avoid delays in retrieving buffered data. The support for the 2G band in Wi-Fi can be useful for several reasons. The 2G band, operating in a low frequency spectrum, can provide greater robustness and a longer range than high frequency bands, such as 5G, 6G, or 60G. The lower frequency spectrum can provide greater immunity to noise and facilitate extended range. The radio listen current on the 2G band is lower compared to high frequency bands. The low-power Wi-Fi internet of things (IoT) devices can rely on the 2G band due to greater power efficiency compared to high frequency bands. The high frequency bands, with wider channel widths (e.g., 80 MHz or 160 MHz), desire frequent bandwidth switching between the actual channel size and the primary channel (e.g., 20 MHz channel) to conserve power during idle states. The 2G band, for example, using a 20 MHz channel, can eliminate the demand for bandwidth switching operations. As a result, the access point and client device can conserve power by deactivating radios operating on high frequency bands during idle periods, improving network efficiency.

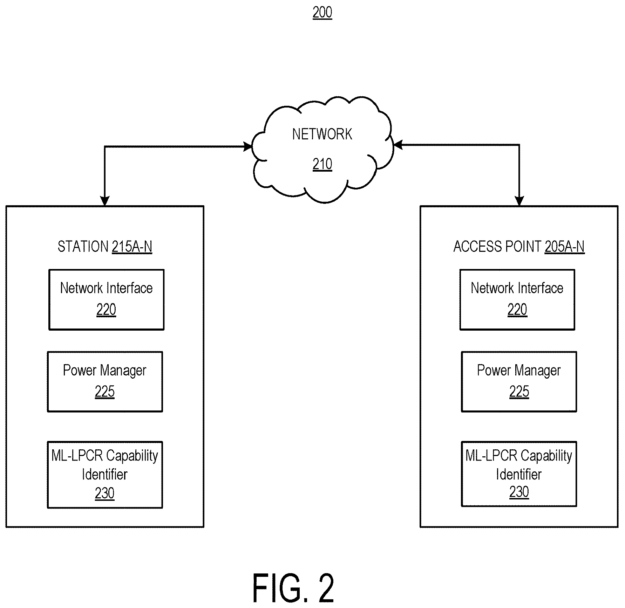

FIG. 2 illustrates an example system 200 for retaining low-power connections in multilink networks. Example system 200 can include one or more access points 205A-205N (sometimes referred to herein as an access point 205) communicatively coupled with one or more stations 215A-215N (sometimes referred to herein as a station 215) over one or more networks 210. Any of the systems described in connection with FIGS. 1A-1C can be configured, constructed, or implemented to implement, operate, and/or use any of the options and techniques described in FIG. 2.

The access point 205 can include a device, system, or module (including a combination of hardware and software) that allows wireless communication devices to connect to a wired network using Wi-Fi or other standards. The access point 205 can sometimes be referred to as a wireless access point (WAP). The access point 205 can include components, such as an antenna for transmitting and receiving wireless signals, a radio device for managing wireless communications, a CPU for processing data and control operations, and memory (DDR) for storing operational data and configurations. The access point 205 can be implemented (e.g., configured, designed, and/or built) for operating in a wireless local area network (WLAN). The access point 205 can connect to a router (e.g., via a wired network) as a standalone device in some embodiments. In some embodiments, the access point 205 can be a component of a router. The access point 205 can provide multiple devices with access to a network. The access point 205 can, for example, connect to a wired Ethernet connection and provide wireless connections using radio frequency links for other devices to utilize that wired connection. The access point 205 can be implemented to support a standard for sending and receiving data using one or more radio frequencies. Those standards, and the frequencies they use can be defined by the IEEE (e.g., IEEE 802.11 standards). The access point 205 can be configured and/or used to support Internet hotspots, and/or on a network to extend the network's Wi-Fi signal range.

The network 210 can include computer networks such as the Internet, local, wide, metro, or other area networks, intranets, satellite networks, other computer networks such as voice or data mobile phone communication networks, and combinations thereof. The network 210 may be any form of computer network that can relay information between the access point 205, the station 215, and one or more information sources, such as web servers or external databases, amongst others. The network 210 can include the Internet and/or other types of data networks, such as a local area network (LAN), a wide area network (WAN), a cellular network, a satellite network, or other types of data networks. The network 210 can include any number of computing devices (e.g., computers, servers, routers, network switches, etc.) that are configured to receive and/or transmit data within the network 210. The network 210 can include any number of hardwired and/or wireless connections. Any or all of the computing devices described herein can communicate wirelessly (e.g., via Wi-Fi, cellular, radio, etc.) with a transceiver that is hardwired (e.g., via a fiber optic cable, a CAT5 cable, etc.) to other computing devices in the network 210. Any or all of the computing devices described herein can communicate wirelessly with the computing devices of the network 210 via a proxy device (e.g., a router, network switch, or gateway).

The station 215 can be a wireless communication device configured for wireless communication in wireless communication networks, such as a LAN, WAN, or cellular network. The station 215 can be configured to communicate wirelessly with network devices, such as the access point 205, using any of the IEEE standards (e.g., IEEE 802.11 standards). The station 215 can be any of the user devices described in connection with FIGS. 1A-C. In some embodiments, the station 215 can include one or more wireless communication devices 102, as described in FIG. 1A, configured to receive services from a communication system.

The access point 205 can include a network interface 220. The network interface 220 can be or include any script, file, program, application, set of instructions, or computer-executable code that is configured to manage the transmission and reception of data packets, control signals, or communication frames over the wireless network. The network interface 220 can include wireless radios, which can manage the transmission and reception of wireless signals, operating on various frequencies and supporting various Wi-Fi standards. In some embodiments, the network interface 220 can include an Ethernet port, which can provide a primary wired connection point, allowing the access point 205 to connect to a router or switch within the wired network. The network interface 220 can further include antenna(s), which can enhance the wireless signal strength and coverage area. The network interface 220 can include onboard processors and memory, which can manage data flow between wired and wireless networks, facilitate encryption and decryption, and run the firmware that controls the access point's functions. The network interface 220 can include firmware and a software interface, which can provide the operating system and configuration settings that allow administrators to manage the access point 205, set up security protocols, and improve performance.

In some embodiments, the network interface 220 of the access point 205 can establish connections with one or more stations 215. The connection between the access point 205 and the stations 215 can include the exchange of authentication and association frames. In the authentication process, the station 215 can transmit an authentication request to the network interface 220 of the access point 205, and the network interface 220 can verify the station's credentials, such as a username and password. Upon successful authentication, the station 215 can transmit an association request to the network interface 220, and the network interface 220 can evaluate the request to determine if the station 215 is allowed to associate. If approved, the network interface 220 can transmit an association response, assigning parameters such as channel, service set identifier (SSID), and basic service set identifier (BSSID).

The network interface 220 of the access point 205 can include a plurality of radios. The radios can refer to the hardware components responsible for transmitting and receiving wireless signals. Each radio can operate on a different frequency band. A frequency band can be a specific range of electromagnetic frequencies used for transmitting or receiving signals. Different generations of mobile networks (e.g., 2G, 3G, 4G, 5G, and 6G) utilize various frequency bands to provide communication services. In some embodiments, the first radio of the access point 205 can operate on the 2G band, providing longer range and lower power consumption compared to higher frequency bands. The other radios of the access point 205 can operate on high frequency bands. The network interface 220 can support simultaneous connections with multiple stations 215. Devices limited to 2G or 3G, as well as those desiring 5G or 6G for higher-speed data transfer, can use the diverse radio bands. The network interface 220 can establish one or more connections with stations 215 using one or more radios from its plurality of radios. The network interface 220 can use one or more radios based on factors such as client capabilities, signal strength, and interference, among others. For instance, the network interface 220 can utilize a long range and low-power radio for distant stations 215, and a high frequency radio for stations 215 seeking high data rates.

In some embodiments, the network interface 220 of the access point 205 can receive a frame from the connected station(s) 215 indicating that the connected station(s) 215 are entering sleep mode. A connected station can refer to any Wi-Fi device (e.g., a station) that has successfully established a connection with the access point 205 within a network. The sleep mode can be a power-saving state implemented by the devices to conserve energy while maintaining the ability to resume full operation. When the connected station 215 enters sleep mode, the connected station 215 can temporarily shut down certain functions, such as the display, radio, MAC/PHY, CPU, memory, and host bus (PCIe), while maintaining the low frequency crystal for waking up the station 215 at specific intervals, such as during the delivery traffic indication messages (DTIM). In some embodiments, the frame can correspond to a physical medium frame, which refers to a data frame transmitted over the physical layer of the network. In some embodiments, the frame can correspond to a protected action frame, which can be used for various control and management tasks within the network. In some embodiments, the frame can correspond to a power mode frame, which can indicate a device's transition into a specific power-saving state, such as sleep or hibernate, to conserve energy.

In some embodiments, the network interface 220 of the access point 205 can transmit a beacon via the low-power radio during a wakeup period to notify the connected station(s) 215 of data ready to be transmitted. The wakeup period can refer to the specific intervals during which the station 215 in sleep mode temporarily activates its radio to check for network activity or receive data. The wakeup period can be based on a timer, external triggers, or other criteria. The beacon frame can inform stations 215 that there is data available for transmission. For example, the beacon frame can indicate that the network interface 220 of the access point 205 has broadcast and multicast (BCMC) data to transmit to the connected station(s) 215. The broadcast data can refer to the transmission of packets to all devices within the network segment, where every connected device receives the broadcasted data, regardless of its relevance to them. The multicast data can include the transmission of packets to a specific group of devices that have indicated interest in receiving the data, often used in streaming media and online gaming. In some embodiments, the beacon frame can include information about the frequency band(s) on which the network interface 220 has transmitted data.

In some embodiments, the network interface 220 of the access point 205 can transmit data to the station 215 via the low-power radio. For example, the network interface 220 can transmit the BCMC data using the radio operating on the 2G band. The network interface 220 can broadcast the BCMC data to the connected station(s) 215 within the network segment to reduce individual point-to-point transmissions. In some embodiments, where the network interface 220 of the access point 205 has the BCMC data, the network interface 220 can buffer the packets and deliver them after the DTIM-0 beacon delivery. In some embodiments, for example, in a multilink configuration, the network interface 220 can deliver the BCMC packets on all available links, as there may be legacy or single link stations connected to different links. The legacy or single link stations operate on a single channel at a time.

The access point 205 can include a power manager 225. The power manager 225 can be or include any script, file, program, application, set of instructions, or computer-executable code that is configured to control the power states of radios operating across multiple frequency bands. The power manager 225 can evaluate network conditions, user demands, and power consumption across different radios to enhance the efficiency of power utilization while maintaining connections within the multilink network. In some embodiments, the power manager 225 of the access point 205 can cause a radio to go into a low-power state and switch off remaining radios. For example, in response to receiving a power management frame from the connected station(s) 215, the power manager 225 can cause a radio operating on the 2G band to transition from hibernate (e.g., not participating in data traffic) to sleep state (e.g., partially active with reduced energy consumption) while maintaining a lower power connection on that band. The lower power connection can refer to the use of reduced transmit power to maintain a connection. The lower connection can minimize energy consumption while maintaining a stable and reliable connection between devices. The configuration can reduce the radio's activity, such as reducing the transmission frequency of beacon frames to conserve energy while still maintaining network synchronization and communication readiness for when the connected station(s) 215 wake up. The power manager 225 can cause radios operating on high frequency bands, such as 6G or 5G, to transition from active to hibernate state, where the radios do not participate in the data traffic.

In some embodiments, the power manager 225 of the access point 205 can determine whether the amount of data to be transmitted exceeds a threshold or is for a low latency application. A threshold can refer to a specific value or limit that, when reached or exceeded, triggers a certain action or event. A low latency application is a type of software or service that desires a minimum delay between the initiation of a request and the response received. The power manager 225 can monitor the data traffic and compare the current data volume to a specific threshold, such as 1Mbps. In some embodiments, the power manager 225 can evaluate whether the transmitted data desires low latency based on various factors, such as application type, packet characteristics, or quality of service (QoS), among others. In some embodiments, the power manager 225 of the access point 205 can activate one or more of the higher power or higher frequency radios. For example, when the amount of data to be transmitted exceeds a specific threshold, indicating that the current radio configuration is insufficient, the power manager 225 can activate one of the higher power radios operating on higher frequency bands and can switch data transmission to the activated higher power radios to manage the increased traffic. Activating a radio can refer to initializing the radio functionality in a device, allowing the device to start transmitting and receiving signals. In some embodiments, in response to determining that the data is for a low latency application, such as video streaming or voice communication, the power manager 225 can activate one or more of the higher capacity radios to maintain the quality of service (QoS).

The access point 205 can include a multi-link lower power connection retention (ML-LPCR) capability identifier 230. The ML-LPCR capability identifier 230 can be or include any script, file, program, application, set of instructions, or computer-executable code that is configured to indicate the device's capability to operate in a power save mode. The ML-LPCR capability of a device can refer to its ability to manage power consumption while maintaining multiple simultaneous connections across different frequency bands. The ML-LPCR capability identifier 230 can signal the status of each radio's power state within a device. The ML-LPCR capability identifier 230 can facilitate communication between the access point 205 and connected stations 215 regarding power usage across multiple radios. In some embodiments, the access point 205 can be ML-LPCR capable or non-ML-LPCR capable, depending on the implementation.

The ML-LPCR capability identifier 230 of the access point 205 can advertise support for ML-LPCR capability to the connected station(s) 215. The ML-LPCR can be configured to operate within a framework involving multi-link operation (MLO), which can allow devices (e.g., access points, clients) to establish simultaneous connections across multiple frequency bands. The ML-LPCR capability identifier 230 of the access point 205 can include information about the access point's ML-LPCR capability in beacon, probe response, and association response frames. The advertisement can inform stations 215 that the access point 205 can manage multiple low-power connections. The lower power aspect can refer to the ability of devices to maintain these multi-link connections without consuming excessive power.

In some embodiments, the ML-LPCR capability identifier 230 of the access point 205 can generate the ML power save notification frame identifying power save state and radio-on-state for each radio. The access point 205 can use the ML power save notification frame to request a connected station 215 to exit its low-power mode and activate higher-power radios, for example, upon identifying increased traffic or to improve communication throughput. The ML power save notification frame can be a protected EHT (extremely high throughput) action frame. The EHT action frame can include several components used to manage and control specific actions within the network. For example, the EHT action frame can include a preamble that supports wider bandwidths and higher order modulation. The EHT action frame can include EHT-SIG fields that carry information, such as modulation and coding schemes, bandwidth, and spatial configuration. The EHT action frame can include data fields that support higher data rates and improve the efficiency of data transmission within the network.

In some embodiments, the format of the ML power save notification frame can include multiple fields. For example, the ML power save notification frame can include a category code set to protected EHT. The ML power save notification frame can specify the action as ML-LPCR ML-Power Save Notification in the protected EHT action field. The ML power save notification frame can include a 1-byte dialog token for managing communication exchanges. The ML power save notification frame can include a power save (PS) link bitmap of 2 bytes, where each bit indicates the status of a radio. For example, the ML power save notification frame can be used to communicate the power save or radio-on state of each radio based on an identifier defined by the ML-LPCR capability identifier 230.

In some embodiments, the ML power save notification frame can be used to evaluate the reachability of the access point 205 or the station 215, such that the device maintains efficient communication across active radios or power-saving radios. For example, the access point 205, connected to multiple stations 215, can periodically transmit ML power save notification frames to manage multiple connections and power consumption. Each station 215 can receive the ML power save notification frame, process the PS link bitmap, and determine the reachability of the access point 205 based on the active or power save state of the access point's radios. If the access point 205 has multiple radios in power save mode, the station 215 can determine that the connection is limited or less reliable, causing the station 215 to adjust its power consumption. For example, if one or more of the access point's radios are active, the station 215 can determine that the connection is stable but limited in terms of data throughput or bandwidth. In response, the station 215 can prioritize data transmission by using the active radio(s) of the access point 205 or evaluate the connection quality to determine whether to activate additional radios on the station 215 for reliable communication.

In some embodiments, the ML-LPCR capability identifier 230 of the access point 205 can set a power management bit to a value to indicate the access point 205 is entering or exiting a power-saving mode. For example, when the access point 205 decides to enter power save (PS) mode, the ML-LPCR capability identifier 230 can set the power management (PM) bit in the frame control field to 1, and the link bitmap to 1. When the access point 205 decides to exit the PS mode for low traffic activities, the ML-LPCR capability identifier 230 can set the PM bit in the frame control field to 0 and the link bitmap to 0. In some embodiments, the ML-LPCR capability identifier 230 of the access point 205 can set the link bitmap corresponding to the 2G radio to 0, indicating that this radio band will be used for communication. The ML-LPCR capability identifier 230 of the access point 205 can transmit the ML power save notification frame to stations 215 to communicate the band details, such as whether the radio operating on a band is in power management mode or is active.

The station 215 can include a network interface 220, a power manager 225, and a ML-LPCR capability identifier 230. The network interface 220, power manager 225, and ML-LPCR capability identifier 230 of the station 215 can be similar to, and include any of the structure and functionality of, their respective counterparts, such as the network interface 220, power manager 225, and ML-LPCR capability identifier 230 of the access point 205. The station 215 can also be referred to herein as a Wi-Fi device, a client, or a client device.

The network interface 220 of the station 215 can establish a connection with the access point 205. For example, the network interface 220 can scan for available wireless networks and select the access point 205. The network interface 220 can transmit an authentication request to the access point 205, providing its credentials, such as a username and password. Upon successful authentication, the access point 205 can grant the network interface 220 permission to associate with the network. The network interface 220 can configure its radios according to the parameters associated with the access point 205, such as channel, SSID, and BSSID. Once the association is complete, the network interface 220 can begin transmitting and receiving data. The network interface 220 of the station 215 can include a plurality of radios, each operating on a different frequency band. For example, the first radio can operate on the 2G band, providing longer range and lower power consumption compared to higher frequency bands. The other radios can operate on high frequency bands, such as 5G or 6G.

In some embodiments, the network interface 220 of the station 215 can transmit a frame to the access point 205 indicating sleep mode. For example, the network interface 220 can transmit a frame to the access point 205. In some embodiments, the frame can correspond to a physical medium frame, which refers to a data frame transmitted over the physical layer of the network. In some embodiments, the frame can correspond to a protected action frame, which can be used for various control and management tasks within the network. In some embodiments, the frame can correspond to a power mode frame, which can indicate a device's transition into a specific power-saving state, such as sleep or hibernate, to conserve energy. The transmission of the frame can allow the access point 205 to adjust its power management strategies and maintain network synchronization with the station 215 during the low-power state. During a wakeup period, the network interface 220 of the station 215 can receive a beacon via the low-power radio from the access point 205. A beacon frame is a type of management frame used in wireless networks. The beacon frame is periodically broadcast by the access point 205 to announce its presence and provide information about the network. The wakeup period can refer to the specific intervals during which a station 215 in sleep mode temporarily activates its radio to check for network activity or receive data. The beacon frame, received via the 2G band radio, can include details of the access point 205, including its status, available services, and any data that is to be transmitted to the station 215. The beacon frame can indicate whether the access point 205 has BCMC data ready for transmission to the network interface 220 of the station 215 across multiple bands.

In some embodiments, the network interface 220 of the station 215 can receive data via the lower power or lower frequency radio from the access point 205. For example, using a radio operating on the 2G band, the network interface 220 can receive the BCMC data through a lower power connection. During the DTIM interval, the radio remains in listening mode to detect incoming beacon signals. When the beacon preamble is detected, the radio shifts into receiving mode to process the incoming frame. The MAC/PHY layer and firmware running in the station's CPU process the beacon frame and initiate actions. The station 215 may return to sleep mode unless the beacon indicates that there is buffered unicast data or upcoming BCMC data delivery from the access point 205, in which case the station 215 remains active to receive the pending data. In some embodiments, the network interface 220 can activate additional radios if the beacon indicates that there is data available on a different frequency band or if the current radio is unable to handle the data load.

In some embodiments, the network interface 220 of the station 215 can communicate data with the access point via the low-power radio. The network interface 220 can use a radio operating on the 2G band to minimize energy consumption during data transmission. In some embodiments, the network interface 220 can transmit and/or receive data through the low-power radio. In some embodiments, the network interface 220 can communicate the active state of its radios by transmitting frames or beacons, for example, to indicate to the access point 205 which radios are active or in low-power mode.

The power manager 225 of the station 215 can control the power states of radios operating across multiple frequency bands. The power manager 225 can determine when to enter sleep mode. The power manager 225 can determine when to enter sleep mode based on several parameters. The parameters can include device inactivity, where the station 215 transitions from hibernate state to sleep mode after a prolonged period of no data transmission or reception. In some embodiments, the power manager 225 can evaluate network conditions, such as signal strength and interference levels, to determine whether the station 215 can enter sleep mode. In some embodiments, the power manager 225 can calculate the average sleep current based on how much time the station 215 spent listening and receiving the beacon at every DTIM and how many DTIMs occurred per second. Based on these metrics, the power manager 225 can compute total power consumption during sleep mode. For example, if the average sleep current per second is 800 nanoamps and the station 215 remains idle (e.g., no data traffic) for one hour, the total power consumption in an hour may be 2.88 milliampere-hours. The power manager 225 can estimate the power consumption during sleep mode based on this determination.

In some embodiments, the power manager 225 of the station 215 can cause a radio to go into a low-power state and switch off remaining radios. Upon determining to enter sleep mode, the power manager 225 can transition the first radio, operating on the lower power 2G band, into sleep mode while maintaining a minimal power connection to the access point 205. The power manager 225 can use the low-power connection to remain in communication with the access point 205 while conserving energy. The power manager 225 can switch off the remaining radios, which operate on higher power bands such as 5G or 6G, further conserving power usage. When the station 215 enters sleep mode, the power manager 225 can temporarily shut down certain functions, such as the display, radio, MAC/PHY, CPU, memory, and host bus (PCIe), while maintaining the low frequency crystal for waking up the stations 215 at specific intervals, such as during DTIM.

In some embodiments, the power manager 225 of the station 215 can determine whether the amount of data to be communicated exceeds a threshold or is for a low latency application. The power manager 225 can monitor the data traffic and compare the current data volume to a specific threshold, such as 1Mbps, to evaluate whether additional resources are desired. In some embodiments, the power manager 225 can evaluate whether the data to be communicated desires low latency based on various factors, such as application type, packet characteristics, or quality of service (QoS), among others. In some embodiments, the power manager 225 of the station 215 can activate one or more of the high power radios. For example, when the amount of data to be communicated exceeds a specific threshold, indicating that the current low-power radio configuration is insufficient, the power manager 225 can activate additional high power or high-capacity radios from the plurality of available radios to manage the data. In some embodiments, if the power manager 225 determines that the data to be communicated is for a low latency application, such as video streaming or voice communication, the power manager 225 can activate one or more of the high-capacity radios to maintain the quality of service (QoS).

The multi-link lower power connection retention (ML-LPCR) capability identifier 230 of the station 215 can indicate the device's capability to operate in a power save mode. The ML-LPCR capability identifier 230 can signal the status of each radio's power state. In some embodiments, the station 215 can be ML-LPCR capable or non-ML-LPCR capable, depending on the implementation. The ML-LPCR capability identifier 230 can generate the ML power save notification frame identifying power save state and radio-on-state for each radio. In some embodiments, the ML power save notification frame can be used to evaluate the reachability of the station 215, such that the station 215 maintains efficient communication across active radios or power-saving radios.

In some embodiments, the ML-LPCR capability identifier 230 of the station 215 can set a power management bit to a value to indicate the station 215 is entering or exiting a power-saving mode. For example, when the station 215 decides to enter power save (PS) mode, the ML-LPCR capability identifier 230 can set the power management (PM) bit in the frame control field to 1, and the link bitmap to 1. When the station 215 decides to exit the PS mode for low traffic activities such as keep-alive packets to prevent the connection from being terminated due to inactivity, the ML-LPCR capability identifier 230 can set the PM bit in the frame control field to 0 and the link bitmap to 0. In some embodiments, the ML-LPCR capability identifier 230 can set the link bitmap corresponding to the 2G radio to 0, indicating that this radio band will be used for communication.

In some embodiments, the ML-LPCR capability identifier 230 can transmit the ML power save notification frame to the access point 205. The station 215 can use the ML power save notification frame to indicate that the station 215 is entering low power mode or, in some embodiments, to request the access point 205 to exit low power mode. For example, the ML-LPCR capability identifier 230 can transmit a frame with the power management (PM) bit in the frame control field set to 1 and the link bitmap set to 1, indicating that all links are in power save mode. The access point 205 may not respond with its ML power save notification frame when the station 215 sets its PM bit. In some embodiments, the access point 205 may treat all links from that station 205 as being in power save state or mode. The ML-LPCR capability identifier 230 can transmit this frame via any of the operating links or active links, for example, when the station 215 determines that the access point 205 is not in the power save mode. In some embodiments, where the access point 205 is in the power save mode, the ML-LPCR capability identifier 230 can transmit the frame via the 2G radio. In some embodiments, when the station 215 decides to exit the power save mode, the ML-LPCR capability identifier 230 can transmit the ML power save notification frame with the PM bit set to 0 and the link bitmap corresponding to the 2G radio set to 0. The station 215 can deliver data via the radio operating on the 2G band. The access point 205, regardless of whether it is in power save mode or not, can respond to the data via the 2G radio.

In some embodiments, when the station 215 decides to exit power save mode for managing heavier uplink data traffic, the ML-LPCR capability identifier 230 can transmit the ML power save notification frame with the PM bit set to 0 and the link bitmap corresponding to the 2G and other desired frequency bands set to 0 via the 2G radio. If the access point 205 is in power save mode, the access point 205 can exit the power save mode and attempt to deliver the ML power save notification frame via the high frequency radio. Once the ML-LPCR capability identifier 230 of the station 215 receives the ML power save notification frame from the access point 205, the station 215 can exit the power save mode and use the high-capacity radio.

In some embodiments, when the access point 205 decides to exit the power save mode for managing heavy downlink data traffic to the station 215, the access point 205 can wake up the 2G radio through the traffic indication map (TIM) and transmit the ML power save notification frame with the PM bit set to 0 and the link bitmap corresponding to the 2G and other desired bands set to 0 via the 2G radio. If the station 215 is in the power save mode, the station 215 can exit the mode and attempt to deliver the ML power save notification frame over the desired higher band. If the access point 205 is able to receive the ML power save notification frame from the station 215, the access point 205 can also exit the power save mode and switch to using the high frequency radio.

The ML-LPCR capability identifier 230 of the access point 205 or station 215 can manage power consumption when connected with a non-ML-LPCR capable access point 205 or station 215 to maintain ML-LPCR level of power efficiency without compromising interoperability. In some embodiments, the ML-LPCR capable station 215 can use the 2G link for keep-alive data packets and exit ML-LPCR mode by communicating a NULL frame via the higher frequency radio when heavy uplink data traffic is desired. If the non-ML-LPCR capable access point 205 is to manage heavy downlink data traffic, the access point 205 can wake up the station 215 via the traffic indication map (TIM) on the 2G radio. Based on the traffic pattern, the station 215 can exit ML-LPCR mode. Similarly, the ML-LPCR capable access point 205 can deactivate higher band links to enforce ML-LPCR behavior when all stations 215 are in an idle state. In some embodiments, when the non-ML-LPCR capable stations 215 desire heavy uplink data traffic, the ML-LPCR capable access point 205 can reactivate the higher band links based on the data traffic pattern.

In some embodiments, when the ML-LPCR capable station 215 is connected to a non-ML-LPCR capable access point 205, the station 215 can transition into ML-LPCR mode during periods of inactivity and exit ML-LPCR mode as desired. For example, the station 215 can use the 2G radio for keep-alive exchanges, but once the data traffic exceeds a predefined threshold, the station 215 can switch to higher band radios for transmission. The station 215 can incorporate a sufficient transition delay before switching to the higher band, as the non-ML-LPCR capable access point 205 may have deactivated its higher band radios during inactivity.

In some embodiments, when a non-ML-LPCR station 215 is connected to an ML-LPCR capable access point 205, the ML-LPCR capable access point 205 can deactivate the higher band radios and retain the 2G radio, for example, causing the station 215 not to use higher band radios. Once high-capacity data traffic is desired, for example, for downlink on the access point 205 or uplink on the station 215, the ML-LPCR capable access point 205 can dynamically reactivate the high band radios based on the data traffic pattern. In some embodiments, the access point 205 can retain the station-side information, even for the deactivated links, and communicate the higher band details (e.g., sta_profiles in the ML IE) to additional stations via the 2G link, even when those links are deactivated. The configuration allows the stations 215 to establish multi-link connections including higher band radios when desired.

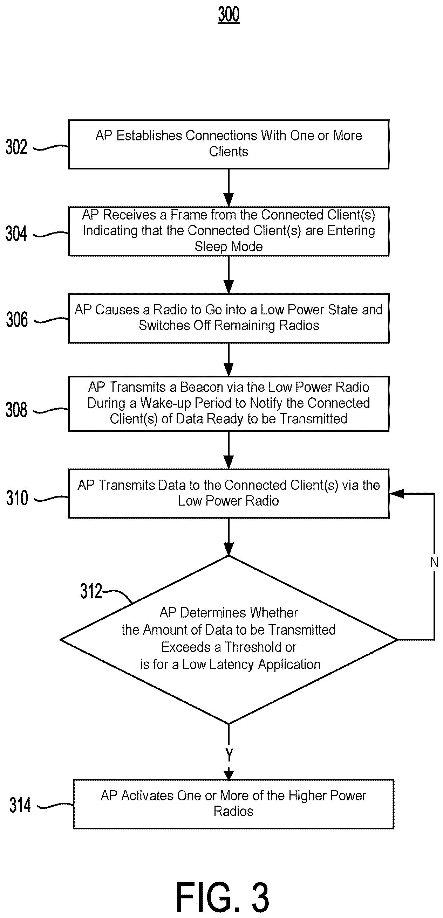

FIG. 3 illustrates an example method 300 of retaining low-power connections in multilink networks. The method 300 can be implemented using a system 100, 200, or any other features discussed in FIGS. 1-2. The method 300 can include acts 302-314. At 302, an access point can establish connections with one or more clients. At 304, the access point can receive a frame from the connected client(s) indicating that the connected client(s) is entering sleep mode. At 306, the access point can cause a radio to go into a low-power state and switch off remaining radios. At 308, the access point can transmit a beacon via the low-power radio during a wakeup period to notify the connected client(s) of data ready to be transmitted. At 310, the access point can transmit data to the connected client(s) via the low-power radio. At 312, the access point can determine whether the amount of data to be transmitted exceeds a threshold or is for a low latency application. At 314, the access point can activate one or more of the higher power radios.

At 302, the access point establishes connections with one or more clients. The connection between the access point and the clients can include the exchange of authentication and association frames. In the authentication process, the client can transmit an authentication request to the access point, and the access point can verify the client's credentials, such as a username and password. Upon successful authentication, the client can transmit an association request to the access point, and the access point can evaluate the request to determine if the client is allowed to associate. If approved, the access point can transmit an association response, assigning parameters such as channel, SSID, and BSSID.

The access point can include a plurality of radios, each operating on a different frequency band. For example, the first radio can operate on the 2G band, providing longer range and lower power consumption compared to higher frequency, higher power, or higher capacity bands. The access point can support simultaneous connections with multiple clients. Devices limited to 2G, as well as those desiring 5G or 6G for high speed data transfer, can use the diverse radio bands. The access point can establish one or more connections with clients using one or more radios from its plurality of radios. The access point can select one or more radios based on factors such as client capabilities, signal strength, and interference, among others. For instance, the access point can utilize a long range or low-power radio for distant clients, and a high frequency radio for clients seeking high data rates.

In some embodiments, the access point can advertise support for multi-link lower power connection retention (ML-LPCR) capability to the connected client(s). The ML-LPCR can be configured to operate within a framework involving multi-link operation (MLO), which can allow devices (e.g., access points, clients) to establish simultaneous connections across multiple frequency bands. The access point can include information about its ML-LPCR capability in beacon, probe response, and association response frames. The advertisement can inform clients that the access point can manage multiple low-power connections efficiently. The lower-power aspect can refer to the ability of devices to maintain these multi-link connections without consuming excessive power. In some embodiments, the access point can generate and transmit a multi-link (ML) power save notification frame to inform connected clients about its current power management status and radio usage. The ML power save notification frame can include information about whether the access point is in a power save mode or operating normally and the status of each radio (active or in power save mode). The access point can transmit the notification frame to all connected clients.

At 304, the access point can receive a frame from the connected client(s) indicating that the connected client(s) are entering sleep mode. The sleep mode can be a power-saving state used by devices to conserve energy while maintaining the ability to resume full operation. When a connected client enters sleep mode, the client can temporarily shut down certain functions, such as the display, radio, MAC/PHY, CPU, memory, and host bus (PCIe), while maintaining the low frequency crystal for waking up the client at specific intervals, such as during the delivery traffic indication messages (DTIM). In some embodiments, the frame can correspond to a physical medium frame, which refers to a data frame transmitted over the physical layer of the network. In some embodiments, the frame can correspond to a protected action frame, which can be used for various control and management tasks within the network. In some embodiments, the frame can correspond to a power mode frame, which can indicate a device's transition into a specific power-saving state, such as sleep or hibernate, to conserve energy.

At 306, the access point can cause a radio to go into a low-power state and switch off remaining radios. For example, in response to receiving the frame from the connected client(s) entering low-power mode, the access point can cause the first radio operating on the 2G band into sleep mode while maintaining a low-power connection to the connected client(s) on that band. The configuration can reduce the radio's activity, such as reducing the transmission frequency of beacon frames to conserve energy while still maintaining network synchronization and communication readiness for when the clients wake up. The access point can deactivate other radios, such as those operating on high frequency bands, to further reduce power consumption. In some embodiments, the access point can be limited to listening mode on the 2G radio, for instance, broadcasting a single beacon per DTIM interval. For example, when the DTIM is set to 3, an access point may transmit 9 beacons on a tri-band router, while an ML-LPCR capable access point may transmit one beacon on the 2G band, with the other radios deactivated.

At 308, the access point can transmit a beacon via the low-power radio during a wakeup period to notify the connected client(s) of data ready to be transmitted. The wakeup period can refer to the specific intervals during which a client in sleep mode temporarily activates its radio to check for network activity or receive data. The wakeup period can be based on a timer, external triggers, or other criteria. The beacon frame can inform clients that there is data available for transmission. For example, the beacon frame can indicate that the access point has broadcast and multicast (BCMC) data to transmit to the clients. In some embodiments, the beacon frame can include information about the frequency band(s) on which the access point has transmitted data.

At 310, the access point can transmit data to the connected client(s) via the low-power radio. The access point can transmit the BCMC data using the radio operating on the 2G band. The access point can broadcast the BCMC data to one or more clients within the network segment to reduce individual point-to-point transmissions. In some embodiments, where the access point has the BCMC data, the access point can buffer the packets and deliver them after the DTIM-0 beacon delivery. In some embodiments, for example, in a multilink configuration, the access point can deliver the BCMC packets on all available links, as there may be legacy or single-link clients connected to different links.

At 312, the access point can determine whether the amount of data to be transmitted exceeds a threshold or is for a low latency application. The access point can monitor the data traffic and compare the current data volume to a specific threshold, such as 1 Mbps. In some embodiments, the access point can evaluate whether the transmitted data desires low latency based on various factors, such as application type, packet characteristics, or quality of service (QoS), among others.

At 314, the access point can activate one or more of the higher power radios. For example, when the amount of data to be transmitted exceeds a specific threshold, indicating that the current radio configuration is insufficient, the access point can activate one of the higher power radios operating on higher frequency bands and can switch data transmission to the activated higher power radios to manage the increased traffic. In some embodiments, in response to determining that the data is for a low latency application, such as video streaming or voice communication, the access point can activate one or more of the higher power radios to maintain the quality of service (QoS).

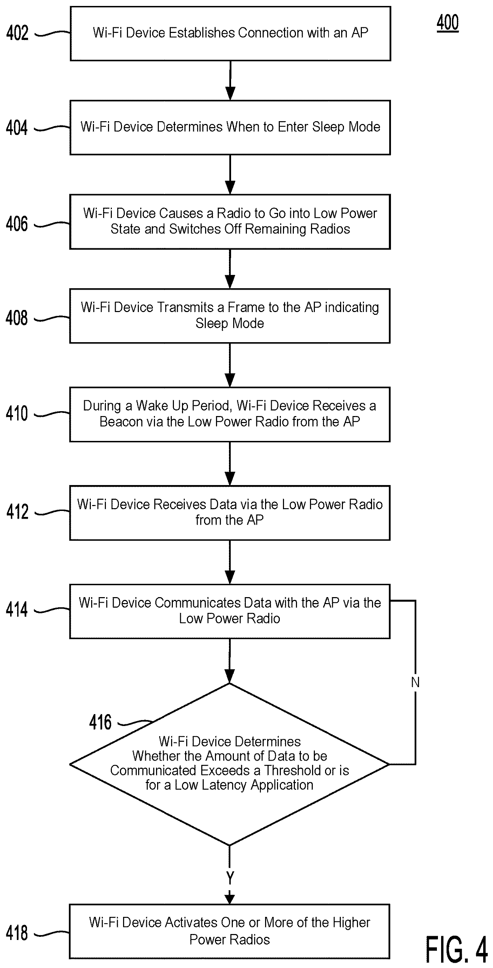

FIG. 4 illustrates an example method 400 of retaining low-power connections in multilink networks. The method 400 can be implemented using a system 100, 200, or any other features discussed in FIGS. 1-2. The method 400 can include acts 402-418. At 402, a Wi-Fi device can establish a connection with an access point. At 404, the Wi-Fi device can determine when to enter sleep mode. At 406, the Wi-Fi device can cause a radio to go into a low-power state and switch off remaining radios. At 408, the Wi-Fi device can transmit a frame to the access point indicating sleep mode. At 410, during a wakeup period, the Wi-Fi device can receive a beacon via the low-power radio from the access point. At 412, the Wi-Fi device can receive data via the low-power radio from the access point. At 414, the Wi-Fi device can communicate data with the access point via the low-power radio. At 416, the Wi-Fi device can determine whether the amount of data to be communicated exceeds a threshold or is for a low latency application. At 418, the Wi-Fi device can activate one or more of the higher power radios.

At 402, the Wi-Fi device can establish a connection with the access point. For example, the Wi-Fi device can scan for available wireless networks and select the access point the Wi-Fi device wants to connect to. The Wi-Fi device can transmit an authentication request to the access point, providing its credentials, such as a username and password. Upon successful authentication, the access point can grant the Wi-Fi device permission to associate with the network. The Wi-Fi device can configure its radios according to the parameters associated with the access point, such as channel, SSID, and BSSID. Once the association is complete, the Wi-Fi device can begin transmitting and receiving data. The Wi-Fi device can include a plurality of radios, each operating on a different frequency band. For example, the first radio can operate on the 2G band, providing longer range and lower power consumption compared to higher frequency bands. The other radios can operate on high frequency bands, such as 5G or 6G. The Wi-Fi device can include multiple radios to send and receive data over different frequency bands. The Wi-Fi device can manage bandwidth by dedicating different radios to specific tasks.

At 404, the Wi-Fi device can determine when to enter sleep mode. The Wi-Fi device can determine when to enter sleep mode based on several parameters. The parameters can include device inactivity, where the Wi-Fi device transitions to sleep mode after a prolonged period of no data transmission or reception. In some embodiments, the Wi-Fi device can evaluate network conditions, such as signal strength and interference levels, to determine whether the Wi-Fi device can enter sleep mode. In some embodiments, the Wi-Fi device can calculate the average sleep current based on how much time the Wi-Fi device spent listening and receiving the beacon at every DTIM and how many DTIMs occurred per second. Based on these metrics, the Wi-Fi device can compute total power consumption during sleep mode. For example, if the average sleep current per second is 800 nanoamps and the Wi-Fi device remains idle for one hour, the total power consumption in an hour may be 2.88 milliampere-hours. The Wi-Fi device can estimate the power consumption during sleep mode based on this determination.

At 406, the Wi-Fi device can cause a radio to go into a low-power state and switch off remaining radios. Upon determining to enter sleep mode, the Wi-Fi device can transition the first radio, operating on the lower power 2G band, into sleep mode while maintaining a minimal power connection to the access point. The Wi-Fi device can use the low-power connection to remain in communication with the access point while conserving energy. The Wi-Fi device can deactivate the remaining radios in its plurality of radios, which operate on higher frequency bands such as 5G or 6G, further conserving power usage. When a Wi-Fi device enters sleep mode, the Wi-Fi device can temporarily shut down certain functions, such as the display, radio, MAC/PHY, CPU, memory, and host bus (PCIe), while maintaining the low frequency crystal for waking up the Wi-Fi device at specific intervals, such as during DTIM.

At 408, the Wi-Fi device can transmit a frame to the access point indicating sleep mode. For example, the Wi-Fi device can transmit a frame to the access point. The frame can indicate that the Wi-Fi device is entering sleep mode. In some embodiments, the frame can correspond to a physical medium frame, which refers to a data frame transmitted over the physical layer of the network. In some embodiments, the frame can correspond to a protected action frame, which can be used for various control and management tasks within the network. In some embodiments, the frame can correspond to a power mode frame, which can indicate a device's transition into a specific power-saving state, such as sleep or hibernate, to conserve energy.

At 410, during a wakeup period, the Wi-Fi device can receive a beacon via the low-power radio from the access point. The wakeup period can refer to the specific intervals during which a Wi-Fi device in sleep mode temporarily activates its radio to check for network activity or receive data. The beacon frame, received via the 2G band radio, can include details of the access point, including its status, available services, and any data that is to be transmitted to the Wi-Fi device. The beacon frame can indicate whether the access point has BCMC data ready for transmission to the Wi-Fi device across multiple bands. By using the 2G band, which operates at lower power, the Wi-Fi device can maintain an energy-efficient connection while in sleep mode.

At 412, the Wi-Fi device can receive data via the low-power radio from the access point. For example, using a radio operating on the 2G band, the Wi-Fi device can receive the BCMC data through a lower power connection. During the DTIM interval, the radio remains in listening mode to detect incoming beacon signals. When the beacon preamble is detected, the radio shifts into receiving mode to process the incoming frame. The MAC/PHY layer and firmware running in the Wi-Fi device's CPU process the beacon frame and initiate actions. The Wi-Fi device may return to sleep mode unless the beacon indicates that there is buffered unicast data or upcoming BCMC data delivery from the access point, in which case the Wi-Fi device remains active to receive the pending data. In some embodiments, the Wi-Fi device can activate additional radios if the beacon indicates that there is data available on a different frequency band or if the current radio is unable to handle the data load.

At 414, the Wi-Fi device can communicate data with the access point via the low-power radio. The Wi-Fi device can use a radio operating on the 2G band to minimize energy consumption during data transmission. In some embodiments, the Wi-Fi device can transmit data through the low-power radio. In some embodiments, the Wi-Fi can receive data through the low-power radio. In some embodiments, the Wi-Fi device can communicate the active state of its radios by transmitting frames or beacons, for example, to indicate the access point which radios are active or in low-power mode.

At 416, the Wi-Fi device can determine whether the amount of data to be communicated exceeds a threshold or is for a low latency application. The Wi-Fi device can monitor the data traffic and compare the current data volume to a specific threshold, such as 1Mbps, to evaluate whether additional resources are desired. In some embodiments, the Wi-Fi device can evaluate whether the data to be communicated desires low latency based on various factors, such as application type, packet characteristics, or quality of service (QoS), among others.

At 418, the Wi-Fi device can activate one or more of the higher power radios. For example, when the amount of data to be communicated exceeds a specific threshold, indicating that the current low-power radio configuration is insufficient, the Wi-Fi device can activate additional higher capacity radios from the plurality of available radios to manage the data. In some embodiments, if the Wi-Fi device determines that the data to be communicated is for a low-latency application, such as video streaming or voice communication, the Wi-Fi device can activate one or more of the higher capacity radios to maintain the quality of service (QoS).

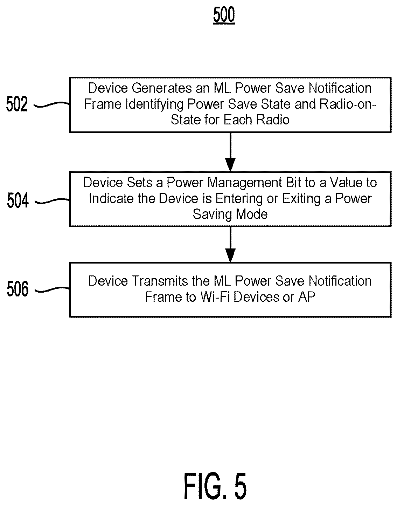

FIG. 5 illustrates an example method 500 of retaining low-power connections in multilink networks. The method 500 can be implemented using a system 100, 200, or any other features discussed in FIGS. 1-2. The method 500 can include acts 502-506. At 502, the device can generate a multi-link (ML) power save notification frame identifying power save state and radio-on-state for each radio. At 504, the device can set a power management bit to a value to indicate the device is entering or exiting a power-saving mode. At 506, the device can transmit the ML power save notification frame to wi-fi devices or an access point.

At 502, the device can generate the ML power save notification frame identifying power save state and radio-on-state for each radio. The device can include a plurality of radios. Each radio can operate on a different frequency band. For example, a first radio can operate on a low-power or low frequency band, which is a longer range compared to the remaining radios operating on high frequency bands. The ML power save notification frame can be a protected EHT (extremely high throughput) action frame. The EHT action frame can include several components used to manage and control specific actions within the network. For example, the EHT action frame can include a preamble that supports wider bandwidths and higher-order modulation. The EHT action frame can include EHT-SIG fields that carry information, such as modulation and coding schemes, bandwidth, and spatial configuration. The EHT action frame can include data fields that support higher data rates and improve the efficiency of data transmission within the network.

In some embodiments, the format of the ML power save notification frame can include multiple fields. For example, the ML power save notification frame can include a category code set to protected EHT. The ML power save notification frame can specify the action as ML-LPCR ML-Power Save Notification in the protected EHT action field. The ML power save notification frame can include a 1-byte dialog token for managing communication exchanges. The ML power save notification frame can include a power save (PS) link bitmap of 2 bytes, where each bit indicates the status of a radio. The ML power save notification frame can be used to communicate the power save or radio-on state of each radio based on an identifier. In some embodiments, the ML power save notification frame can be used to evaluate the reachability of the device, such that the device maintains efficient communication across active or power save radios.

At 504, the device can set a power management bit to a value to indicate the device is entering or exiting a power-saving mode. For example, when the device decides to enter power save (PS) mode, the device can set the power management (PM) bit in the frame control field to 1, and the link bitmap to 1. When the device decides to exit the PS mode for low traffic activities such as keep-alive, the device can set the PM bit in the frame control field to 0 and the link bitmap to 0. In some embodiments, the device can set the link bitmap corresponding to the 2G radio to 0, indicating that this radio band will be used for communication.

At 506, the device can transmit the ML power save notification frame to wi-fi devices or an access point. For example, the client can transmit a frame with the power management (PM) bit in the frame control field set to 1 and the link bitmap set to 1, indicating that all links are in power save mode. In some embodiments, the access point may not respond with its ML power save notification frame when the client sets its PM bit. In some embodiments, the access point may treat all links from that client as being in power save state or mode. The client can transmit this frame via any of the operating links or active links, for example, when the client determines that the access point is not in the power save mode. In some embodiments, where the access point is in the power save mode, the client can transmit the frame via the 2G radio. In some embodiments, when the client decides to exit the power save mode, the client can transmit the ML power save notification frame with the PM bit set to 0 and the link bitmap corresponding to the 2G radio set to 0. The client can deliver data via the radio operating on the 2G band. The access point, regardless of whether it is in power save mode or not, can respond to the data via the 2G band.

In some embodiments, the client can use the ML power save notification frame to indicate that the client is entering low power mode or, in some embodiments, to request the access point to exit low power mode. For example, when the client decides to exit power save mode for managing heavier uplink data traffic, the client can transmit the ML power save notification frame with the PM bit set to 0 and the link bitmap corresponding to the 2G, and other desired frequency bands set to 0 via the 2G band. If the access point is in power save mode, the access point can exit the power save mode and attempt to deliver the ML power save notification frame via the higher band radio. Once the client receives the ML power save notification frame from the access point, the client can exit the power save mode and use the higher band radio.

In some embodiments, the access point can use the ML power save notification frame to request the client to exit low power mode and resume full communication. For example, when the access point decides to exit the power save mode for managing heavy downlink data traffic to the client, the access point can wake up the 2G radio through the traffic indication map (TIM) and transmit the ML power save notification frame with the PM bit set to 0 and the link bitmap corresponding to the 2G and other desired bands set to 0 via the 2G band. If the client is in the power save mode, the client can exit the mode and attempt to deliver the ML power save notification frame over the desired higher band. If the access point is able to receive the ML power save notification frame from the client, the access point can also exit the power save mode and switch to using the higher band radio.

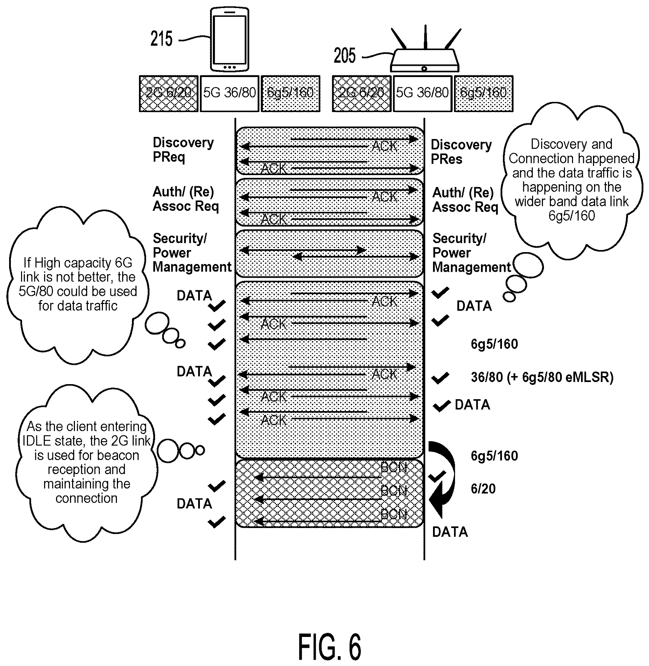

Referring now to FIG. 6, depicted is an example implementation of multi-band communication between a station 215 and an access point 205. The station 215 and the access point 205 can include multiple radios operating on different frequency bands, such as 2G, 5G, and 6G. The station 215 can transmit a discovery request (PReq), and the access point 205 can respond with a discovery response (PRes). The devices can exchange authentication and association requests and responses to establish a connection. Once the connection is established, the devices can transmit data packets over the frequency bands. As shown, the access point 205 or the station 215 can switch between different frequency bands based on factors such as data traffic or power consumption for efficient resource allocation. For example, data traffic can occur over the wider band, such as 6G, for high-capacity transmission. If the high-capacity band becomes inefficient or unstable, the devices can switch to a 5G band for continued data transmission. When the station 215 enters an idle state, such as when the station 215 is not transmitting or receiving data, the station 215 can remain connected to the network over the 2G band. For example, the radio operating on the 2G band can be used to receive periodic beacons from the access point 205 to stay synchronized with the network and maintain the connection. Depending on the traffic patterns, such as when the connected station(s) enter sleep mode, the access point 205 can deactivate radios operating on higher frequency bands, such as 5G or 6G, to minimize power consumption while keeping the connection alive via the low-power radio.

It should be noted that certain passages of this disclosure may reference terms such as "first" and "second" in connection with devices, modes of operation, transmit chains, roles, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. Alternate embodiments that may not have been presented for a specific portion of the innovations or that further undescribed alternate embodiments may be available for a portion is not to be considered a disclaimer of those alternate embodiments. Thus, it is to be understood that other embodiments can be utilized, and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for a specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as those produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

## Claims

1. A system comprising:
an access point configured with a plurality of radios each operating on a different band of a plurality of bands, a first radio of the plurality of radios operating on a first band having a longer range and lower power than bands of remaining radios of the plurality of radios, the access point configured to:
establish, using one or more of the plurality of radios, one or more connections with the one or more clients;
receive a frame from the one or more clients connected to the access point, the frame indicating the one or more clients going into sleep mode;
responsive to the frame, cause the first radio to go into sleep mode, while maintaining a lower power connection on the first band to the one or more clients, and switch off the remaining radios of the plurality of radios;
transmit, by the first radio via the lower power connection on the first band, during a wakeup period, a beacon to the one or more clients, the beacon indicating the access point has broadcast and multicast (BCMC) data to transmit the one or more clients for the plurality of bands; and
transmit, using only the first radio operating on the first band via the lower power connection, the BCMC data to the one or more clients.

2. The system of claim 1, wherein the access point is further configured to
use the first radio for transmitting data with the one or more clients until an amount of data to be transmitted exceeds a threshold.

3. The system of claim 2, wherein the access point is further configured to
activate at least one or more of the remaining radios of the plurality of radios and switch to the at least one or more of the remaining radios to transmit data to the one or more clients.

4. The system of any one of the claims 1 to 3, wherein the access point is further configured to
determine that data to be transmitted to the one or more clients is for a low latency application and responsive to the determination, activate at least one or more of the remaining radios of the plurality of radios to transmit the data.

5. The system of any one of the claims 1 to 4, wherein the access point is further configured to
advertise support for multi-link lower power connection retention (ML-LPCR) capability to the one or more clients;
wherein in particular the access point is further configured to
advertise support for the ML-LPCR capability in one of the following: one or more beacons, probe responses, and association response frames.

6. The system of any one of the claims 1 to 5, wherein the access point is further configured to
generate and transmit to the one or more clients a multi-link (ML) power save notification frame, the multi-link (ML) power save notification frame identifying one of a power save state or a radio-on state of each of the plurality of different radios.

7. The system of any one of the claims 1 to 6, wherein
the one or more clients comprise a plurality of radios operating on different bands and, responsive to going into sleep mode, maintain the connection to the access point using a radio of the plurality of radios on the first band while deactivating any remaining radios of the plurality of radios.

8. The system of any one of the claims 1 to 7, wherein
the first band of the first radio is 2G while remaining bands of the plurality of bands comprise one or more of the following: 5G or 6G.

9. A system comprising:
a Wi-Fi device configured with a plurality of radios each operating on a different band of a plurality of bands, a first radio of the plurality of radios operating on a first band having a longer range and lower power than bands of remaining radios of the plurality of radios, the Wi-Fi device configured to:
establish, using the plurality of radios, connections with an access point;
responsive to determining to go into sleep mode, cause the first radio to go into sleep mode, while maintaining a lower power connection on the first band to the access point, and switch off the remaining radios of the plurality of radios;
transmit a frame to the access point, the frame indicating to the access point that the Wi-Fi device is going into the sleep mode;
receive, by the first radio via the lower power connection on the first band, during a wakeup period, a beacon from the access point, the beacon indicating the access point has broadcast and multicast (BCMC) data to transmit to the Wi-Fi device for the plurality of bands; and
receive, using only the first radio on the first band via the lower power connection, the BCMC data from the access point.

10. The system of claim 9, wherein
the Wi-Fi device is further configured, responsive to the beacon, to activate at least one or more of the remaining radios of the plurality of radios.

11. The system of claim 9 or 10, wherein
the Wi-Fi device is further configured to communicate, via one or more frames or beacons, an active state of at least one or more of the remaining radios of the plurality of radios.

12. The system of any one of the claims 9 to 11, wherein the system comprises at least one of the following features:
(A) the Wi-Fi device is further configured to use the first radio for communicating data with the access point until an amount of data to be communicated exceeds a threshold; wherein in particular
the Wi-Fi device is further configured, responsive to the amount of data to be communicated exceeding the threshold, to activate at least one or more of the remaining radios of the plurality of radios to communicate the data;
(B) the Wi-Fi device is further configured to determine that data to be communicated with the Wi-Fi device is for a low latency application and responsive to the determination, activate at least one or more of the remaining radios of the plurality of radios to transmit the data;
(C) the first band of the first radio is 2G while remaining bands of the plurality of bands comprise one or more of the following: 5G or 6G.

13. A device comprising:
a plurality of radios each operating on a different band of a plurality of bands, a first radio of the plurality of radios operating on a first band having a longer range and lower power than bands of remaining radios of the plurality of radios,
one or more processors configured to:
generate a multi-link (ML) power save notification frame, the multi-link (ML) power save notification frame identifying the power save state and the radio-on state of each of the plurality of different radios; and
transmit the multi-link (ML) power save notification frame to one or more clients connected to the access point.

14. The device of claim 13, wherein the one or more processors are further configured to set a power management bit in a field of the multi-link (ML) power save notification frame to a value to indicate the device is entering and/or exiting a power saving (PS) mode.

15. The device of claim 13 or 14, wherein the one or more processors are further configured to
generate the multi-link (ML) power save notification frame to have a power saving link bitmap to identify whether a radio operating on a band is in power management mode or is active.
